# EUROPEAN PATENT APPLICATION

(11) **EP 4 742 775 A1**
(43) Date of publication of application: **13.05.2026**
(21) Application number: 24856669.7
(22) Date of filing: 24.07.2024
(51) Int. Cl.: H04W 52/02, H04R 1/10, H02J 7/00, H04W 4/80

(54) **ELECTRONIC DEVICE AND POWER SUPPLY METHOD USING SAME**

(30) Priority: 22.08.2023 KR 20230109732; 04.10.2023 KR 20230131714
(71) Applicant: Samsung Electronics Co., Ltd., Suwon-si, Gyeonggi-do 16677 (KR)
(72) Inventor: LEE, Seungho, Suwon-si, Gyeonggi-do 16677 (KR); LEE, Jaesung, Suwon-si, Gyeonggi-do 16677 (KR); HAN, Kiwook, Suwon-si, Gyeonggi-do 16677 (KR)
(74) Representative: Gulde & Partner
(86) International application number: PCT/KR2024/010726
(87) International publication number: WO 2025/042056

(57) **Abstract**

According to various embodiments, an electronic device may comprise: a sensor module for detecting, while mounted on a charging device, the state of a charging device; a communication module; a memory; and a processor operatively connected to the sensor module, the communication module, and the memory. The processor can: check a closed state of the charging device by using the sensor module; start a low power process in response to the closed state being maintained for the set time; check whether information related to pairing with at least one external electronic device is present in the memory; block power supply using the charging device if the pairing-related information is not present in the memory; and enter a first low power mode in which power is not supplied to an internal circuit of the electronic device. Other various embodiments are possible.

## Description

### [Technical Field]

Embodiments of the present disclosure relate to an electronic device and a power supply method using the same.

### [Background Art]

With the advancement of digital technology, various types of electronic devices such as mobile communication terminals, smartphones, tablet personal computers (PCs), personal digital assistants (PDAs), electronic notebooks, notebooks, wearable devices, Internet of Things (IoT) devices, and/or audible devices are widely used. Electronic devices are moving away from uniform rectangular shapes and gradually evolving into diverse forms. For example, electronic devices are increasingly developing into wearable electronic devices (e.g., wireless earphones) that can be worn on parts of the human body to enhance portability or user accessibility.

The above information may be provided as related art for the purpose of assisting in understanding the present disclosure. No claim or determination is made as to whether any of the above is applicable as prior art related to the present disclosure.

### [Disclosure of Invention]

### [Technical Field]

Electronic devices (e.g., wearable electronic devices, wireless earphones) are manufactured in a miniaturized form to facilitate carrying or wearing on a part of the body and may be designed with a battery included within the internal space of the electronic device. For example, the electronic devices may be implemented in a form where the battery is physically difficult to separate. After the manufacturing is completed, electronic devices may remain in a state in which power is continuously supplied on the basis of the built-in battery.

In manufactured electronic devices, power is continuously supplied, at least partially, to the internal circuit via the battery, which may lead to the problem of battery performance degradation. Manufactured electronic devices may undergo distribution processes lasting several days to hundreds of days before reaching consumers, during which battery performance may gradually degrade. For example, as batteries continuously discharge, their available capacity (e.g., maximum charge capacity, battery capacity) may decrease at least partially. Electronic devices with degraded battery performance may experience relatively low voltage supply during operation. Under low voltage supply conditions, the battery may also exhibit swelling phenomena. Particularly for miniaturized batteries, a decrease in battery capacity may lead to relatively greater performance degradation compared to larger batteries.

According to one embodiment, during the distribution process of manufactured electronic devices, battery performance degradation may occur because of continuous battery consumption. According to one embodiment, the objective is to provide an electronic device that prevents battery performance degradation during the distribution process of manufactured electronic devices.

The technical subjects pursued in this document may not be limited to the above mentioned technical subjects, and other technical subjects which are not mentioned may be clearly understood, through the following descriptions, by those skilled in the art to which this document pertains.

### [Solution to Problem]

According to various embodiments, an electronic device may comprise: a sensor module for detecting, while mounted on a charging device, the state of a charging device; a communication module; a memory; and a processor operatively connected to the sensor module, the communication module, and the memory. The processor can: check a closed state of the charging device by using the sensor module; start a low power process in response to the closed state being maintained for the set time; check whether information related to pairing with at least one external electronic device is present in the memory; block power supply using the charging device if the pairing-related information is not present in the memory; and enter a first low power mode in which power is not supplied to an internal circuit of the electronic device.

In a method for supplying power to an electronic device according to various embodiments, the method may comprise: checking a closed state of the charging device by using the sensor module while mounted on a charging device; starting a low power process in response to the closed state being maintained for the set time; checking whether information related to pairing with at least one external electronic device is present in the memory; blocking power supply using the charging device if the pairing-related information is not present in the memory; and enter a first low power mode in which power is not supplied to an internal circuit of the electronic device.

### [Advantageous Effects of Invention]

According to various embodiments of the present invention, an electronic device (e.g., a wearable electronic device, a wireless earphone) that has been manufactured may detect a situation where the electronic device will not be used for a certain period of time (e.g., during distribution, a situation where the packaging state is maintained for a set time), and in response to detecting the situation, may block the voltage supplied to the internal circuit. The electronic device may prevent voltage consumption from the battery until it is first used by the user, thereby preventing battery performance degradation. According to one embodiment, this may increase battery efficiency and enhance the usability of the electronic device.

Effects obtainable in the present disclosure are not limited to the aforementioned effects, and other effects not mentioned may be easily understood from the following description by a person having ordinary knowledge in the art to which the disclosure pertains.

### [Brief Description of Drawings]

The features and advantages of the present disclosure may become more apparent from the accompanying drawings and description thereof.
FIG. 1 is a block diagram of an electronic device within a network environment according to one embodiment of the present disclosure.
FIG. 2a is an exemplary diagram illustrating a closed state of a charging device for charging an electronic device according to one embodiment of the present disclosure.
FIG. 2b is an exemplary diagram illustrating an open state of a charging device for charging an electronic device according to one embodiment of the present disclosure.
FIG. 3 is a block diagram of an electronic device and a charging device according to one embodiment of the present disclosure.
FIG. 4 is a flowchart illustrating a method for supplying power to an electronic device according to one embodiment of the present disclosure.
FIG. 5a is a first timetable illustrating a process of entering a first low power mode in a situation where there is no pairing-related information according to one embodiment of the present disclosure.
FIG. 5b is a second timetable illustrating a process of entering a second low power mode in a situation where there is a pairing-related information according to one embodiment of the present disclosure.

In connection with the description of the drawings, the same or similar reference numerals may be used for identical or similar components.

### [Mode for the Invention]

The detailed description, with reference to the drawings of the present invention, may be provided to comprehensively understand the various embodiments of the present invention, as defined by the claims and their equivalents. The detailed description includes descriptions of various specific embodiments, but they may be considered as one embodiment. Those skilled in the art will appreciate that various changes and modifications to the various embodiments described herein may be made without departing from the scope and spirit of the present disclosure. Descriptions of known functions and configurations may be omitted for clarity and brevity.

The terms and words described below are not limited to their bibliographic (literary) meanings and may be used to clearly and consistently understand the disclosure of the present invention. The following description according to various embodiments of the present invention is intended to illustrate the invention and should not be construed as limiting the invention, as defined by the appended claims and their equivalents.

Nouns written in the singular form may be understood to include plural referents unless contextually clearly described otherwise.

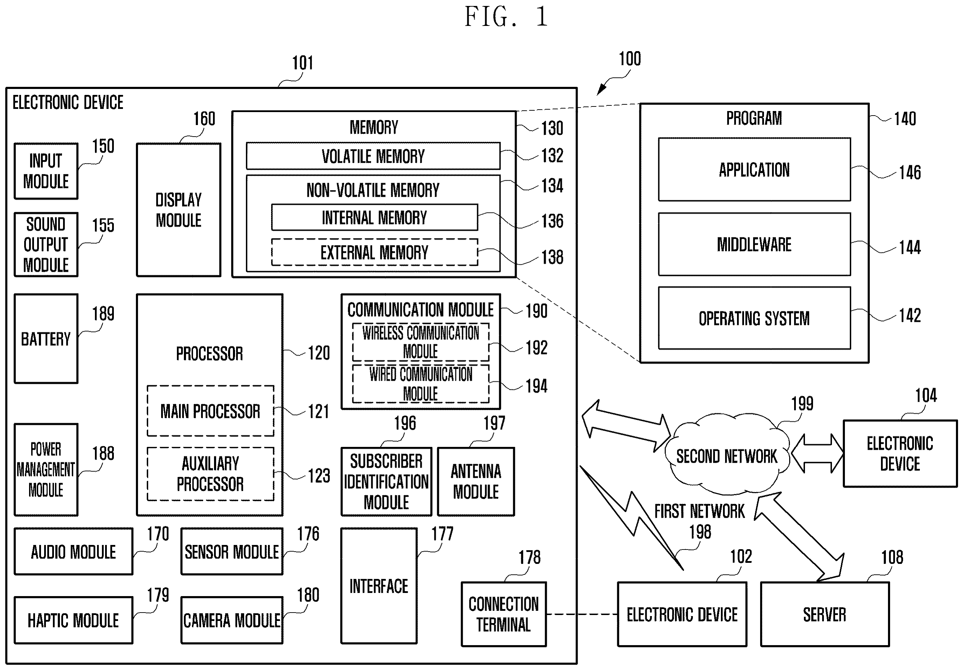

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102)(e.g., a speaker or a headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). For example, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

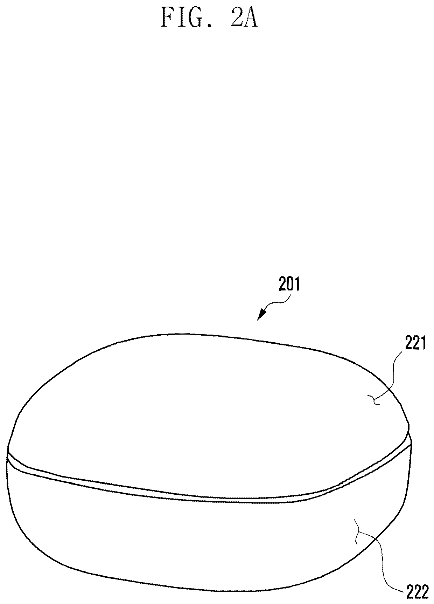

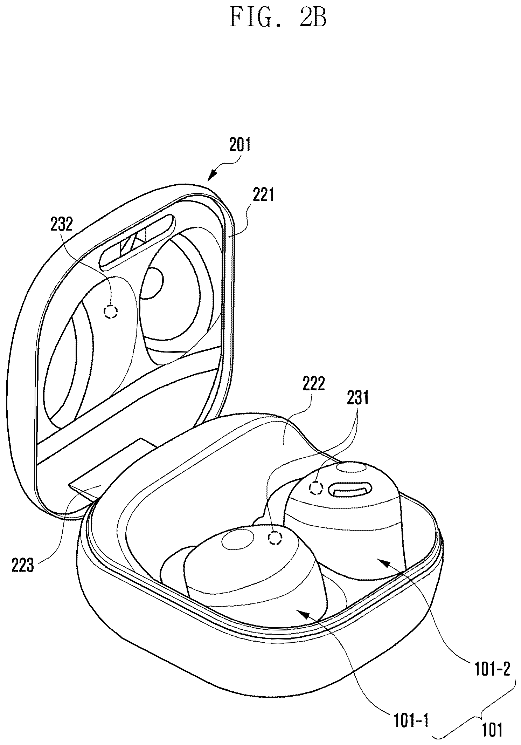

FIG. 2a is an exemplary diagram illustrating a closed state of a charging device for charging an electronic device according to one embodiment of the present disclosure. FIG. 2b is an exemplary diagram illustrating an open state of a charging device for charging an electronic device according to one embodiment of the present disclosure.

The electronic device 101 of FIGS. 2a and 2b may be at least partially similar to the electronic device 101 of FIG. 1, or may further include other embodiments of the electronic device 101. The charging device 201 (e.g., cradle) shown in FIGS. 2a and 2b may be designed with a structure where the electronic device 101 is at least partially coupled within an internal space. According to one embodiment, the charging device 201 may supply power (e.g., voltage, power source) to the electronic device 101 for charging a battery (e.g., the battery 189 of FIG. 1) included in the electronic device 101. The electronic device 101 may charge the battery 189 at least partially on the basis of the power supplied by the charging device 201.

With reference to FIGS. 2a and 2b, the electronic device 101 may be disposed to be at least partially accommodated within the internal space of the charging device 201. The electronic device 101 may be disposed in a structure that physically contacts the charging device 201. The electronic device 101 may include a wireless earphone comprising a first earphone 101-1 (e.g., left-earphone) worn on the left ear and a second earphone 101-2 (e.g., right-earphone) worn on the right ear. In the following description, the electronic device 101 may be understood to include the first earphone 101-1 and the second earphone 101-2.

The charging device 201 of FIGS. 2a and 2b may include a first housing 221 corresponding to an upper cover, a second housing 222 corresponding to a bottom cover, and a hinge device 223 configured to at least partially join the edge line of the first housing 221 and the edge line of the second housing 222. According to one embodiment, the charging device 201 may include a first housing 221 and a second housing 222 that are foldably coupled to each other with respect to the hinge device 223. For example, the hinge device 223 may be designed to be at least partially coupled to the first housing 221 and the second housing 222 along the edge lines of the first housing 221 and the second housing 222. The first housing 221 and the second housing 222 may be designed to include a mounting area (e.g., a recess, a recessed area) where the electronic device 101 may be at least partially mounted. According to one embodiment, when an electronic device 101 is mounted on a charging device 201, the electronic device 101 and the charging device 201 may be operatively connected.

According to one embodiment, the charging device 201 may operate in either a closed state, as shown in FIG. 2a, or an open state, as shown in FIG. 2b. For example, when the charging device 201 is in the closed state, it may include a state in which one surface of the first housing 221 and one surface of the second housing 222 are overlapped with respect to each other. For example, when the charging device 201 is in the open state, the first housing 221 and the second housing 222 may be in a state unfolded by a predetermined angle with respect to the hinge device 223.

With reference to FIG. 2a, when the charging device 201 is in a closed state, the electronic device 101 may be disposed such that it is at least partially mounted within an area formed inside the charging device 201 (e.g., a recess, a recess area, a recess area formed in the second housing 222), in a state not exposed to the external environment. With reference to FIG. 2b, when the charging device 201 is in an open state, the electronic device 101 may be at least partially exposed to the external environment while being mounted inside the charging device 201.

According to one embodiment, the electronic device 101 may include a Hall sensor 231 for detecting a closed state (FIG. 2a) and an open state (FIG. 2b) with respect to the charging device 201. For example, the electronic device 101 may include at least one Hall sensor 231 corresponding to each of the first earphone 101-1 and the second earphone 101-2. With reference to FIG. 2b, the electronic device 101 may be mounted in a form at least partially mounted to the second housing 222 and may detect changes in magnetic force with respect to a magnetic member 232 (e.g., a magnet, a member generating magnetic force) disposed in the first housing 221 using at least one Hall sensor 231. For example, when the electronic device 101 is mounted on the charging device 201, the disposition location of the magnetic member 232 may be determined on the basis of the disposition location of the at least one Hall sensor 231. With reference to FIG. 2b, although a single magnetic member 232 is shown, this is not limited thereto. The magnetic member 232 may be implemented in a plurality corresponding to each Hall sensor 231. According to one embodiment, the electronic device 101 may sense changes in magnetic force corresponding to the magnetic member 232 included in the charging device 201 using at least one Hall sensor 231, and on the basis of the sensed changes in magnetic force, may determine the state (e.g., open state, closed state) of the charging device 201.

With reference to FIG. 2a, when the charging device 201 is in a closed state, the charging device 201 may be in a situation where it supplies power (e.g., power source, voltage) at least partially to the electronic device 101 disposed within its internal space. For example, the electronic device 101 may use the power supplied from the charging device 201 to charge a battery (not shown) (e.g., the battery 189 of FIG. 1) embedded in the electronic device 101. With reference to FIG. 2b, when the charging device 201 is in an open state, the electronic device 101 (e.g., a wearable electronic device, a wireless earphone) may be operatively connected in communication with an external electronic device (e.g., a smartphone, an electronic device 102 and 104 of FIG. 1). For example, if the electronic device 101 has a history of being connected to the external electronic device 102 and 104 previously, the electronic device 101 may automatically attempt to establish a communication connection with the external electronic device 102 and 104 in response to the open state of the charging device 201. In another example, if the electronic device 101 has no prior history of connection with the external electronic device 102 and 104, the electronic device 101 may operate in a stand-by mode for establishing a communication connection with another electronic device in response to the open state of the charging device 201. When the electronic device 101 is in stand-by mode, upon receiving a connection request signal from another electronic device, the electronic device 101 may attempt to establish a communication connection with the other electronic device.

According to one embodiment, while the electronic device 101 is mounted on the charging device 201, the electronic device 101 may detect changes in magnetic force generated by a magnetic member 232 using a Hall sensor 231 and may determine the state of the charging device 201 (e.g., closed state, open state) on the basis of the detected changes in magnetic force. The electronic device 101 may perform a set operation according to the confirmed state of the charging device 201.

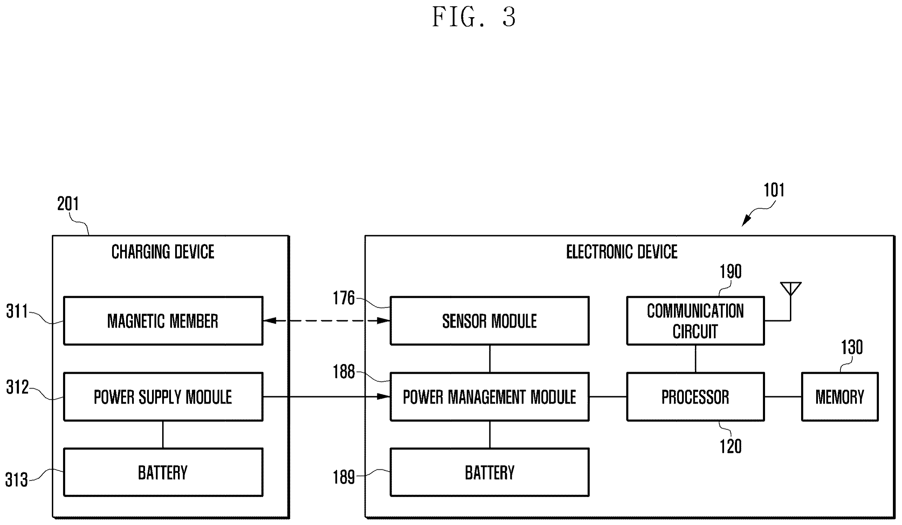

FIG. 3 is a block diagram of an electronic device and a charging device according to one embodiment of the present disclosure.

The electronic device 101 of FIG. 3 may be at least partially similar to the electronic device 101 of FIGS. 1, 2a, and 2b, or may further include other embodiments of the electronic device 101. The charging device 201 of FIG. 3 may be at least partially similar to the charging device 201 of FIGS. 2a and 2b, or may further include other embodiments of the charging device 201.

According to one embodiment, the electronic device 101 may be mounted in a manner that is at least partially coupled to the charging device 201. According to one embodiment, when the electronic device 101 is mounted on the charging device 201, the electronic device 101 and the charging device 201 may be operatively connected. For example, the electronic device 101 may at least partially control the operation and functionality of the operatively connected charging device 201.

With reference to FIG. 3, the electronic device (e.g., the electronic device 101 of FIGS. 1, 2a, and 2b) may include a processor (e.g., the processor 120 of FIG. 1), a memory (e.g., the memory 130 of FIG. 1), a sensor module (e.g., the sensor module 176 of FIG. 1), a power management module (e.g., the power management module 188 of FIG. 1), a battery (e.g., the battery 189 of FIG. 1), and/or a communication circuit (e.g., the communication module 190 of FIG. 1). The electronic device 101 may include a wearable device that can be worn on a part of the user's body (e.g., an ear). For example, the electronic device 101 may include a first earphone (e.g., the first earphone 101-1 of FIG. 2b) worn on the left ear and a second earphone (e.g., the second earphone 101-2 of FIG. 2b) worn on the right ear. According to one embodiment, the first earphone 101-1 and the second earphone 101-2, and their respective components, are substantially identical and may include the components of the electronic device 101 shown in FIG. 3.

With reference to FIG. 3, the charging device (e.g., the charging device 201 of FIGS. 2a and 2b) may include a cradle designed to be at least partially coupled with the electronic device 101. The charging device 201 may include a magnetic member 311, a power supply module 312, and/or a battery 313. The charging device 201 may supply power (e.g., voltage, power source) to the electronic device 101 to charge the battery 189 contained within the electronic device 101 while the electronic device 101 is mounted. For example, the power supply module 312 of the charging device 201 may supply power (e.g., power source) to the power management module 188 of the electronic device 101 on the basis of the battery 313 of the charging device 201.

According to one embodiment, the processor 120 of the electronic device 101 may execute a program (e.g., the program 140 of FIG. 1, a program related to power supply) stored in the memory 130 to control at least one other component (e.g., a hardware and/or software component) and perform various data processing or operations. According to one embodiment, the processor 120 may be operatively, functionally, and/or electrically connected to the memory 130, the sensor module 176, the power management module 188, the battery 189, and/or the communication circuit 190.

According to one embodiment, the processor 120 may execute a program related to power supply installed in the memory 130 (e.g., a program for managing power supply via the battery 189, a program for executing a low power process) and may control power supply on the basis of the battery 189. For example, the processor 120 may control a power management module 188 to prevent power from being supplied to at least one component.

According to one embodiment, the sensor module 176 may include at least one Hall sensor (Hall IC) (e.g., the Hall sensor 231 of FIG. 2b) and at least one magnetoresistive (MR) sensor for detecting the state (e.g., closed state, open state) of the charging device 201. For example, at least one MR sensor may include a magnetoresistive element whose electrical resistance changes in response to variations in magnetic force. The processor 120 may detect changes in magnetic force in the surroundings on the basis of the sensor module 176 (e.g., Hall sensor, MR sensor). For example, the charging device 201 may include a magnetic member 311 (e.g., the magnetic member 232 of FIG. 2b) that generates magnetic force internally, and the magnetic field (value) in the surroundings may change depending on the disposition location (e.g., the location of the magnetic member 311 when closed, the location of the magnetic member 311 when open) of the magnetic member 311. According to one embodiment, the processor 120 may detect changes in the magnetic force generated by the magnetic member 311 on the basis of a sensor module 176 (e.g., a Hall sensor 231, MR sensor (not shown)), and determine whether the charging device 201 is in a closed state (e.g., FIG. 2a) or an open state (e.g., FIG. 2b).

According to one embodiment, the power management module 188 may supply power to components included in the electronic device 101 under the control of the processor 120. For example, on the basis of the battery 189, the processor 120 may supply power through the power management module 188 to at least one of the sensor module 176, the memory 130, and the communication circuit 190. For example, the processor 120 may control the power management module 188 to supply a predetermined amount of power to the sensor module 176.

According to one embodiment, the battery 189 may be a power supply component for supplying power to at least one component included in the electronic device 101. For example, the processor 120, under the control of the power management module 188, may supply power from the battery 189 to each component.

According to one embodiment, the communication circuit 190 may perform a communication connection with an external electronic device 102 and 104 (e.g., a smartphone, a mobile terminal). For example, the processor 120 may perform a communication connection with the external electronic device 102 and 104 in response to the charging device 201 being in an open state. The processor 120 may check the communication connection history stored in the memory 130 and, on the basis of the checked communication connection history, determine the external electronic device 102 and 104 with which to establish the communication connection. According to one embodiment, if an external electronic device 102 and 104 that was previously operatively connected to the electronic device 101 is located within a distance capable of communication connection with the electronic device 101, the processor 120 of the electronic device 101 may automatically establish a communication connection with the external electronic device 102 and 104 via the communication circuit 190. According to one embodiment, if an external electronic device 102 and 104 that was previously operatively connected to the electronic device 101 is not located within a distance where a communication connection with the electronic device 101 is possible, the processor 120 may search for another external electronic device via the communication circuit 190 to establish a communication connection and may also establish a communication connection with the searched other external electronic device.

According to one embodiment, the power supply module 312 of the charging device 201 may determine, under the control of the processor 120, whether to supply power from the charging device 201 to the electronic device 101. For example, while the electronic device 101 is mounted on the charging device 201, the power supply module 312 of the charging device 201 may be operatively connected to the power management module 188 of the electronic device 101. Upon receiving a power request signal from the electronic device 101, the charging device 201 may supply power to the power management module 188 on the basis of the battery 313 of the charging device 201.

According to one embodiment, the magnetic member 311 of the charging device 201 may be disposed in at least one of a first housing (e.g., the first housing 221 of FIG. 2a and FIG. 2b) and a second housing (e.g., the second housing 222 of FIG. 2a and FIG. 2b) that constitute the charging device 201. For example, the magnetic member 311 may include a member that generates a magnetic force (e.g., a magnet). The disposition location of the magnetic member 311 may be determined on the basis of the disposition location of the Hall sensor 231 included in the sensor module 176 of the electronic device 101. According to one embodiment, the charging device 201 may operate in either a closed state (e.g., FIG. 2a) or an open state (e.g., FIG. 2b), and the magnetic force value in the closed state may differ from the magnetic force value in the open state. According to one embodiment, the processor 120 may use the sensor module 176 (e.g., Hall sensor) to detect changes in magnetic force corresponding to changes in the state of the charging device 201. On the basis of the changes in magnetic force, the processor 120 may determine the state of the charging device 201 (e.g., open state, closed state).

According to one embodiment, the power supply module 312 of the charging device 201 may also detect and distinguish the state of the charging device 201 (e.g., closed state, open state). The power supply module 312 may charge the battery 189 of the electronic device 101 via the power supply module 188 of the electronic device 101 while the electronic device 101 is mounted on the charging device 201.

According to one embodiment, the processor 120 of the electronic device 101 may use a sensor module 176 (e.g., a Hall sensor) to detect the state (e.g., closed state, open state) of the charging device 201, and in response to the charging device 201 being in the closed state, control the power management module 188 to prevent power from being supplied to the sensor module 176. For example, a power management integrated circuit (PMIC) included in the power management module 188 may perform operations, under the control of the processor 120, to supply power to the sensor module 176 (e.g., a Hall sensor) or to block power.

According to one embodiment, the processor 120 may determine whether a charging device 201 in a closed state is maintained for a set time. If the charging device 201 maintains the closed state for the predetermined time, the processor 120 may start a low power process. For example, the low power process may be a power supply method that partially blocks the power supplied to each component or supplies power adjusted below a predetermined threshold to reduce the power consumed by the electronic device 101. The processor 120 may execute the low power process by controlling the power management module 188.

According to one embodiment, the electronic device 101 may check the communication connection history with the external electronic device 102 and 104 while in a state where a low power process has started (e.g., during execution of the low power process). If there is no communication connection history between the electronic device 101 and the external electronic device 102 and 104, the start time of the low power process may include the time when the electronic device 101 first operates after the manufacturing is completed, or the time when the electronic device 101 is initialized. For example, the absence of a communication connection history may indicate that the electronic device 101 is in a state where it is not substantially used by a user. According to one embodiment, the electronic device 101, while in a state where the low power process has started, may enter a first low power mode (e.g., ship mode) if no communication connection history with the external electronic device 102 and 104 is confirmed. In the first low power mode, the processor 120 may turn off (e.g., deactivate) the LDO regulator (low-dropout regulator) supplying power to the sensor module 176 and may block the power supplied to the sensor module 176. When in the first low power mode, the sensor module 176 (e.g., a Hall sensor) may be in a deactivated state since its power supply is blocked. When in the first low power mode, the processor 120 may not detect the state (e.g., closed state, open state) of the charging device 201 because the Hall sensor is deactivated.

According to one embodiment, the electronic device 101 may check the communication connection history with the external electronic device 102 and 104 while the low power process is started (e.g., during the execution of the low power process). If there is a communication connection history between the electronic device 101 and the external electronic device 102 and 104, it may indicate that the electronic device 101 is in a state of being substantially used by the user. According to one embodiment, if the electronic device 101 confirms a communication connection history with the external electronic device 102 and 104 while in a state where a low power process has been started, it may enter a second low power mode (e.g., shutdown mode). In the second low power mode, the processor 120 may turn on (e.g., activate) the LDO regulator (low-dropout regulator) that supplies power to the sensor module 176 and may supply the set power to the sensor module 176. When in the second low power mode, the sensor module 176 (e.g., a Hall sensor) may be supplied with the set power and maintained in an active state. When in the second low power mode, the processor 120 may use the active Hall sensor to detect the state (e.g., closed state, open state) of the charging device 201.

According to one embodiment, when the electronic device 101 operates in a first low power mode (e.g., a mode that blocks power supplied to the sensor module 176), the electronic device 101 may detect, through the power supply module 312 of the charging device 201, a situation where power of a set voltage value (e.g., approximately 5V) is supplied, or where power exceeding the set voltage value is supplied (e.g., a situation where power is supplied to the charging device 201 from an external power source). For example, the charging device 201 may be at least partially activated on the basis of the supplied power. In this case, the processor 120 of the electronic device 101 may supply the power supplied from the charging device 201 to the sensor module 176 (e.g., a Hall sensor) and may at least partially activate the sensor module 176. The processor 120 may use the activated Hall sensor to detect an open state and a closed state of the charging device 201. For example, the electronic device 101 may release the first low power mode when power exceeding a set voltage value is supplied through the charging device 201. According to one embodiment, the electronic device 101 with the first low power mode released may terminate the low power process and determine that the electronic device 101 is in a state substantially being used by the user.

According to one embodiment, when the electronic device 101 is operating in a second low power mode, the electronic device 101 may use a sensor module 176 (e.g., a Hall sensor) to detect an open state and a closed state of the charging device 201. The electronic device 101 may release the second low power mode in response to the charging device 201 changing from a closed state to an open state. According to one embodiment, the electronic device 101, having released the second low power mode, may terminate the low power process.

According to various embodiments, the electronic device (e.g., the electronic device 101 of FIGS. 1, 2a, and 2b) may include a sensor module (e.g., the sensor module 176 of FIG. 3, a Hall sensor (Hall IC)) to detect the state (e.g., open state, closed state) of the charging device while mounted on the charging device 201 (e.g., the charging device 201 of FIGS. 2a, 2b, and 3), a communication circuit (e.g., the communication circuit 190 of FIG. 3), a memory (e.g., the memory 130 of FIGS. 1 and 3), and a processor (e.g., the processor 120 of FIGS. 1 and 3) operatively connected to the sensor module 176, the communication circuit 190, and the memory 130. The processor 120 may use the sensor module 176 to detect a closed state for the charging device 201. The processor 120 may start a low power process in response to the closed state being maintained for a set time. The processor 120 may check whether pairing-related information with at least one external electronic device 102 and 104 is present in the memory 130. If pairing-related information is not present in the memory 130, the processor 120 may block power supply using the charging device 201. The processor 120 may enter a first low power mode (ship mode) in which power is not supplied to the internal circuit of the electronic device 101.

According to one embodiment, the sensor module 176 may include at least one Hall sensor (Hall IC). The processor 120 may detect changes in magnetic force generated on the basis of the magnetic member 311 included in the charging device 201 using the Hall sensor. The processor 120 may determine a closed state for the charging device 201 on the basis of the magnetic field value generated by the magnetic member 311.

According to one embodiment, the electronic device 101 may further include a power management module (e.g., the power management module 188 of FIGS. 1 and 3) that supplies power to internal circuits. The processor 120 may, in response to entering a first low power mode (ship mode), block power supplied from the power management module 188 to the sensor module 176. The processor 120 may at least partially deactivate the sensor module 176.

According to one embodiment, the electronic device 101 may further include a battery (e.g., the battery 189 of FIGS. 1 and 3) that supplies power to the sensor module 176 via the power management module 188. The processor 120 may, in response to entering a first low power mode (ship mode), block power supplied from the battery 189 to the sensor module 176.

According to one embodiment, in the first low power mode (ship mode) in which power is not supplied to internal circuits, the processor 120 may supply power from the charging device 201 to the sensor module 176 via the power management module 188 when power is supplied from the charging device 201. The processor 120 may activate the sensor module 176 at least partially.

According to one embodiment, the processor 120 may enter a second low power mode (shutdown mode), where power is supplied to internal circuits set at a predetermined level, when pairing-related information with at least one external electronic device 102 and 104 is present while a low power process is started.

According to one embodiment, the pairing-related information may include at least one of information confirming a connection history with at least one external electronic device 102 and 104 and login-related information corresponding to at least one external electronic device 102 and 104.

According to one embodiment, if pairing-related information is not present, the processor 120 may transmit a request signal to the charging device 201 to block power supply, thereby preventing power from being supplied by the charging device 201.

According to one embodiment, the processor 120 may determine whether power is being supplied by the charging device 201 in response to the closed state being maintained for a set time. The processor 120 may start a low power process in response to a situation where power is not being supplied from the charging device 201. The processor 120 may determine whether pairing-related information is present with at least one external electronic device 102 and 104. If pairing-related information is not present, the processor 120 may enter a first low power mode (ship mode).

According to one embodiment, the processor 120 may release the first low power mode in response to the power supplied from the charging device 201 exceeding a set threshold. The processor 120 may supply power to the internal circuit of the electronic device 101.

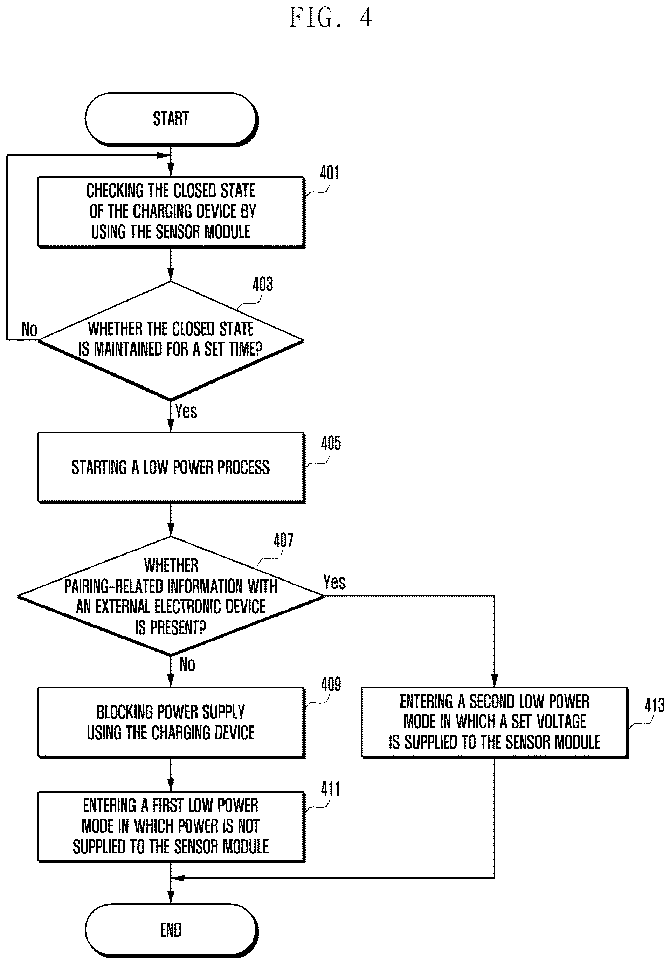

FIG. 4 is a flowchart illustrating a method for supplying power to an electronic device according to one embodiment of the present disclosure.

In the following embodiments, the operations may be performed sequentially, but they are not necessarily performed sequentially. For example, the order of the operations may be changed, and at least two operations may be performed in parallel.

The electronic device 101 of FIG. 4 may be at least partially similar to the electronic device 101 of FIGS. 1, 2a, and 2b and/or the electronic device 101 of FIG. 3, or may further include other embodiments of the electronic device 101. The charging device 201 of FIG. 4 may be at least partially similar to the charging device 201 of FIGS. 2a, 2b, and 3, or may further include other embodiments of the charging device 201.

With reference to FIG. 4, the electronic device 101 may remain mounted on the charging device 201 after the manufacturing is completed. The processor (e.g., the processor 120 of FIG. 3) of the electronic device 101 may use a sensor module (e.g., the sensor module 176, Hall sensor (Hall IC) of FIG. 3) to detect the state of the charging device 201 (e.g., closed state (FIG. 2a), open state (FIG. 2b)).

In operation 401, the processor 120 may use the sensor module 176 (e.g., Hall sensor) to confirm the closed state of the charging device 201. For example, the charging device 201 may have a magnetic member (e.g., the magnetic member 311 of FIG. 3) disposed in at least one of a first housing (e.g., the first housing 221 of FIGS. 2a and 2b) and a second housing (e.g., the second housing 222 of FIGS. 2a and 2b). For example, when the charging device 201 is in a closed state, the processor 120 may use the sensor module 176 to detect a first magnetic field value. When the charging device 201 is in an open state, the processor 120 may use the sensor module 176 to detect a second magnetic field value. According to one embodiment, the processor 120 may determine whether the charging device 201 is in a closed state or an open state on the basis of the magnetic force value detected using the sensor module 176.

In operation 403, the processor 120 may determine whether the closed state of the charging device 210 is maintained for a set time. For example, the charging device 210 remaining in the closed state for the set time may indicate that the electronic device 101 is in a state where it is substantially not in use.

If the closed state of the charging device 210 is maintained for a set time in operation 403, the processor 120 may start a low power process in operation 405. For example, the low power process may be a power supply method that partially blocks power supplied to each component, or supplies power adjusted below a predetermined threshold, to reduce power consumption in the electronic device 101. The processor 120 may execute the low power process by controlling a power management module (e.g., the power management module 188 of FIG. 3).

In operation 407, the processor 120 may check whether pairing-related information (e.g., communication connection history information, flag information, log-in information) with an external electronic device (e.g., the electronic device 102 and 104 of FIG. 1, a smartphone, a mobile terminal) is present. For example, if the electronic device 101 has previously established a communication connection with the external electronic device 102 and 104 via a communication circuit (e.g., the communication circuit 190 of FIG. 3), pairing-related information (e.g., communication connection history information, flag information, log-in information) may be stored in the memory (e.g., the memory 130 of FIG. 1 and FIG. 3).

According to one embodiment, the processor 120 may also utilize the following function value in relation to the history (e.g., history, pairing history) of the communication connection with the external electronic device 102 and 104.

**[Table 1]**

| |
|---|
| bool i sNoLastConnectedDevice () { |
| struct TwuBtAddr addr = { . buf = { 0,},}; |
| TWA_SETTING_READ( addr.last.connected , & addr.buf ); |
| return TwuBtAddr_IsNull (& addr ); |
| } |

For example, on the basis of the function values in (Table 1), if "True" is confirmed, the processor 120 may determine that pairing-related information is not present between the electronic device 101 and the external electronic device 102 and 104. On the basis of the function value in (Table 1), if the processor 120 confirms "False," it may determine that pairing-related information is present between the electronic device 101 and the external electronic device 102 and 104.

According to one embodiment, the processor 120 may utilize defined flag information to determine whether the electronic device 101 has been substantially used by a user. For example, the flag information may include information related to the execution of pairing operations (e.g., communication connections) between the electronic device 101 and the external electronic device 102 and 104. As another example, the flag information may include log-in information. In a situation where the electronic device 101 communicates with the external electronic device 102 and 104, the electronic device 101 typically needs to perform a login operation for a specific account (e.g., a Google account). According to one embodiment, on the basis of the flag information, the processor 120 may determine the history of the communication connection between the electronic device 101 and the external electronic device 102 and 104.

If pairing-related information is not present in operation 407, the processor 120 may block power supply using the charging device 201 in operation 409. For example, the processor 120 may transmit a request signal to the power supply module 312 of the charging device 201 to block power supply, thereby blocking the power supplied from the charging device 201 to the electronic device 101. The power supply module 312 of the charging device 201 may, in response to receiving the request signal, block the power supply to the electronic device 101 on the basis of the battery 313. According to another embodiment, in operation 409, the processor 120 may check whether power is being supplied from the charging device 201. In operation 409, the processor 120 may proceed to operation 411 under the condition that no power is being supplied from the charging device 201.

In operation 411, the processor 120 may enter a first low power mode in which power is not supplied to the sensor module 176. For example, the low power process may proceed in one of the following ways: the electronic device 101 enters the first low power mode of operation 411; or the electronic device 101 enters the second low power mode of operation 413. In the first low power mode, the processor 120 may at least partially control the power management module 188 to prevent power from being supplied to the sensor module 176. For example, the processor 120 may stop the operation of an LDO regulator (low-dropout regulator) that supplies power to the sensor module 176 and may block the power supply to the sensor module 176. According to one embodiment, by blocking the power supply to the sensor module 176, the processor 120 may prevent a situation where the battery 189 is continuously consumed, thereby degrading the performance of the battery 189. Preventing degradation of the performance of the battery 189 may enhance the usability of the electronic device 101.

If pairing-related information is present in operation 407, the processor 120 may enter a second low power mode in which a set voltage is supplied to the sensor module 176 in operation 413. For example, the second low power mode may be a mode (e.g., sleep mode, standby mode) where relatively low power is supplied to the internal circuit of the electronic device 101 while the electronic device 101 is in use by the user. For example, in the second low power mode, the processor 120 may supply the voltage set to the sensor module 176. The second low power mode may allow at least partial power to be supplied to the sensor module 176, and the state (e.g., closed state, open state) of the charging device 201 may be detected by the electronic device 101.

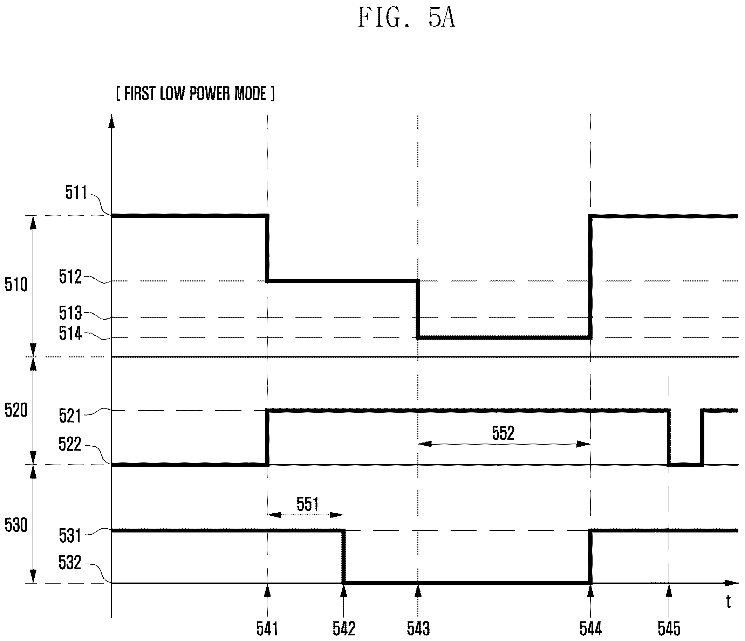

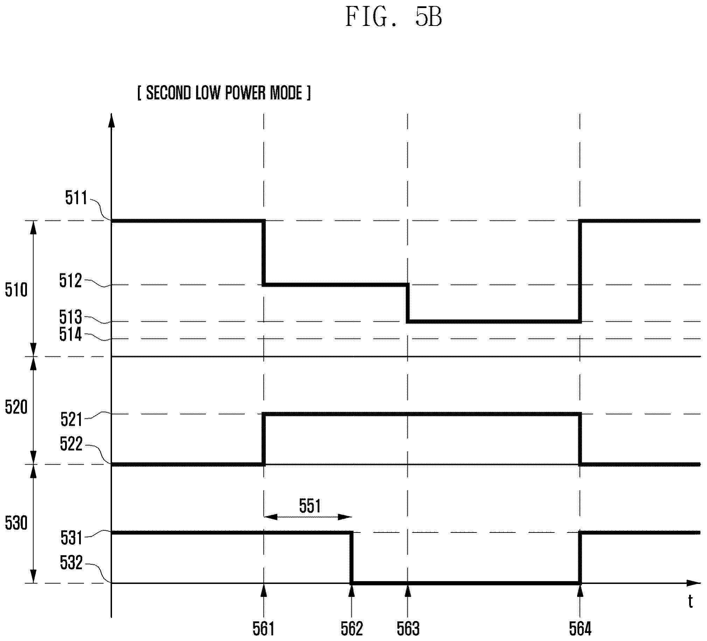

FIG. 5a is a first timetable illustrating a process of entering a first low power mode in a situation where there is no pairing-related information according to one embodiment of the present disclosure. FIG. 5b is a second timetable illustrating a process of entering a second low power mode in a situation where there is a pairing-related information according to one embodiment of the present disclosure.

The electronic device 101 of FIGS. 5a and 5b may be at least partially similar to the electronic device 101 of FIGS. 1, 2a, and 2b and/or the electronic device 101 of FIG. 3, or may further include other embodiments of the electronic device 101. The charging device 201 of FIG. 5a and FIG. 5b may be at least partially similar to the charging device 201 of FIGS. 2a, 2b, and 3, or may further include other embodiments of the charging device 201. The operation illustrated in FIGS. 5a and 5b may be at least partially controlled by a processor 120 (e.g., the processor 120 of FIGS. 1 and 3) of the electronic device 101.

With reference to FIGS. 5a and 5b, while the electronic device 101 is mounted on the charging device 201, a first graph 510 indicating the current consumption of the electronic device 101, a second graph 520 indicating the state of the charging device 201 (e.g., closed state, open state), and a third graph 530 indicating the power supply from the charging device 201 to the electronic device 101 are shown. For example, the first graph 510 shows a first current value 511 consumed when the electronic device 101 operates in a normal mode, a second current value 512 consumed when the electronic device 101 operates in a sleep mode, a fourth current value 514 when the electronic device 101 operates in a first low power mode (e.g., ship mode), and a third current value 513 when the electronic device 101 operates in a second low power mode (e.g., shutdown mode). For example, the second graph 520 may represent a closed state 521 and an open state 522 for the charging device 201. For example, the third graph 530 may represent a state 531 where power (e.g., approximately 5V) is supplied from the charging device 201 to the electronic device 101 and a state 532 where power is not supplied from the charging device 201 to the electronic device 101.

The first timetable of FIG. 5a illustrates the process (e.g., transition to a first low power mode) where the operation of the electronic device 101 changes from the first time point 541 to the fifth time point 545. The second timetable of FIG. 5b illustrates the process (e.g., transition to a second low power mode) where the operation of the electronic device 101 changes from the sixth time point 561 to the ninth time point 564.

With reference to FIG. 5a, the electronic device 101 may be in a state where pairing-related information (e.g., communication connection history information, flag information, log-in information) is not stored in the memory (e.g., the memory 130 of FIGS. 1 and 3). For example, when the charging device 201 is in the open state 522, the electronic device 101 may operate in a normal mode and may be in a state where a first current value 511 corresponding to the normal mode is consumed. If the electronic device 101 is mounted on the charging device 201 in the normal mode, the electronic device 101 may be in a state 531 where power is supplied from the charging device 201.

With reference to FIG. 5a, at a first point in time 541, the charging device 201 may change from an open state 522 to a closed state 521, and the processor 120 of the electronic device 101 may change the operating mode from normal mode to sleep mode in response to the charging device 201 changing to the closed state 521. For example, the current consumed by the electronic device 101 may decrease from a first current value 511 to a second current value 512. For example, the second current value 512 may be a current value that is relatively lower than the first current value 511.

According to one embodiment, when the charging device 201 maintains a closed state 521 for a set time 551 while power is supplied from the charging device 201 to the electronic device 101 in a state 531, the electronic device 101 may start a low power process at a second point in time 542. For example, when the low power process is started, the processor 120 may at least partially control the charging device 201 to prevent power from being supplied from the charging device 201 to the electronic device 101. From the second point in time 542 when the low power process is started, the electronic device 101 may be in a state 532 where power is not supplied from the charging device 201.

At a third point in time 543, the electronic device 101 may change its operating mode from a sleep mode to a first low power mode in response to a situation where pairing-related information (e.g., communication connection history information) is not present. For example, the current consumed by the electronic device 101 may decrease from the second current value 512 to a fourth current value 514 predetermined at the second current value 512. For example, the fourth current value 514 may be a current value relatively lower than the second current value 512 and may be predetermined by the processor 120. According to one embodiment, when the electronic device 101 is in the first low power mode, the power supplied to the components may be minimized or the power may not be supplied at all. According to one embodiment, the electronic device 101 in the first low power mode may include a state where it cannot detect an open state 522 or a closed state 521 of the charging device 201, and may include a state 532 where power is not supplied from the charging device 201. For example, during an interval 552 of operation in the first low power mode, a Hall sensor for detecting the state of the charging device 201 may operate in a deactivated state. During the interval 552 when operating in the first low power mode, since the state of the charging device 201 is not detected, the charging device 201 may maintain a state 532 where power is not supplied to the electronic device 101. According to one embodiment, the electronic device 101 may be in a state where power consumption is minimized during the interval 552 when operating in the first low power mode.

At the fourth point in time 544, the charging device 201 may receive power from an external power source, and the charging device 201 may supply the supplied power (e.g., approximately 5V) to the electronic device 101. At the fourth point in time 544, the electronic device 101 may be in a state 531 where power is supplied from the charging device 201, and the Hall sensor, which was deactivated at the third point in time 543, may be at least partially activated on the basis of the supplied power. According to one embodiment, the power being supplied to the charging device 201 from an external power source at the fourth point in time 544 may signify a situation where a user connects a charging line (e.g., a power supply line) to the charging device 201 in order to use the electronic device 101 and the charging device 201. At the fourth point in time 544, the electronic device 101 may determine that the user is substantially using the electronic device 101. According to one embodiment, the electronic device 101 may, in response to the situation where power is supplied to the charging device 201 from the external power source, change the Hall sensor from a deactivated state to an activated state and may terminate the low power process. As the low power process ends, the electronic device 101 may change its operating mode from the first low power mode to the normal mode. For example, the current consumed by the electronic device 101 may increase from the fourth current value 514 to the first current value 511. At the fourth timing point 544, as the Hall sensor changes to an active state, the electronic device 101 may use the activated Hall sensor to detect the state of the charging device 201 (e.g., closed state 521, open state 522).

At the fifth time point 545, the processor 120 of the electronic device 101 may use the Hall sensor to detect situations where the charging device 201 changes from the closed state 521 to the open state 522, or from the open state 522 to the closed state 521. At the fifth point in time 545, even if the state of the charging device 201 changes, the electronic device 101 may maintain a normal mode (e.g., a mode in which the first current value 511 is consumed).

According to one embodiment, the electronic device 101 may release the first low power mode in response to a situation where power is supplied from an external power source at the fourth point in time 544. The electronic device 101 may change its operating mode from the first low power mode to the normal mode, and the consumed current may increase from the fourth current value 514 to the first current value 511. According to one embodiment, the fourth point in time 544 may be defined as the point in time when the electronic device 101 is substantially used by the user.

With reference to FIG. 5b, the electronic device 101 may have pairing-related information (e.g., communication connection history information, flag information, log-in information) with an external electronic device (e.g., the electronic device 102 and 104 of FIG. 1, a smartphone, a mobile terminal) stored in the memory 130. For example, when the charging device 201 is in an open state 522, the electronic device 101 may operate in a normal mode and may be in a state where a first current value 511 corresponding to the normal mode is consumed. If the electronic device 101 is mounted in the charging device 201 during the normal mode, the electronic device 101 may be in a state 531 where power is supplied from the charging device 201.

With reference to FIG. 5b, at the sixth point in time 561, the charging device 201 may change from an open state 522 to a closed state 521, and the processor 120 of the electronic device 101 may change the operating mode from normal mode to sleep mode in response to the charging device 201 changing to the closed state 521. For example, the current consumed by the electronic device 101 may decrease from a first current value 511 to a second current value 512. For example, the second current value 512 may be a current value relatively lower than the first current value 511.

According to one embodiment, when power is supplied from the charging device 201 to the electronic device 101 in a state 531, if the charging device 201 maintains a closed state 521 for a set time 551, the electronic device 101 may start a low power process at a seventh point in time 562. For example, when the low power process begins, the processor 120 may at least partially control the charging device 201 to prevent power from being supplied from the charging device 201 to the electronic device 101. From the seventh point in time 562 when the low power process is started, the electronic device 101 may be in a state 532 where power is not supplied from the charging device 201.

At the seventh point in time 562, the electronic device 101 may be in a state 532 where power is not supplied from the charging device 201, and the low power process may begin. For example, when the low power process begins, starting from the seventh point in time 562, the electronic device 101 may be in a state 532 where power is not supplied from the charging device 201.

At the eighth time point 563, the electronic device 101 may change its operating mode from sleep mode to a second low power mode in response to a situation where pairing-related information (e.g., communication connection history information) is present. For example, the current consumed by the electronic device 101 may decrease from a second current value 512 to a third current value 513 that is predetermined. For example, the third current value 513 may be a current value that is relatively lower than the second current value 512 and may be predetermined by the processor 120. According to one embodiment, when the electronic device 101 is in the second low power mode, the power supplied to the components may be reduced or the power may not be supplied at all. According to one embodiment, the electronic device 101 in the second low power mode may use a Hall sensor to detect an open state 522 or a closed state 521 of the charging device 201 and may include a state 532 where power is not supplied from the charging device 201.

At the ninth point in time 564, the electronic device 101 may detect a situation where the charging device 201 changes from a closed state 521 to an open state 522, and may control the charging device 201 to supply power from the charging device 201. At the ninth point in time 564, the charging device 201 may change from a state 532 where it does not supply power to the electronic device 101 to a state 531 where it supplies power to the electronic device 101. At the ninth point in time 564, the processor 120 of the electronic device 101 may detect, using a Hall sensor, a situation where the charging device 201 changes from a closed state 521 to an open state 522, and in response to the situation, may change the operating mode from the second low power mode to the normal mode. For example, the current consumed by the electronic device 101 may increase from the third current value 513 corresponding to the second low power mode to the first current value 511 corresponding to the normal mode.

According to one embodiment, the electronic device 101 may release the second low power mode in response to a situation where the charging device 201 changes from a closed state 521 to an open state 522 at the ninth point in time 564. The electronic device 101 may change its operating mode from the second low power mode to the normal mode, and the consumption current may increase from the third current value 514 to the first current value 511.

According to one embodiment, the fourth current value 514 during operation in the first low power mode (e.g., ship mode) may be relatively lower than the third current value 513 during operation in the second low power mode (e.g., shutdown mode).

According to one embodiment, the electronic device 101 in the first low power mode may correspond to a state where the user is not using the electronic device 101 (e.g., when the electronic device 101 is newly manufactured and in distribution), and may minimize power consumption on the basis of the battery (e.g., the battery 189 of FIG. 1). The electronic device 101 may prevent situations where the performance of the battery 189 degrades. The electronic device 101 operating in the first low power mode may minimize the power consumed by the electronic device 101, thereby increasing the efficiency of the battery 189.

In a method for supplying power to an electronic device 101 according to various embodiments, the method may comprise: checking a closed state of the charging device by using the sensor module 176 while mounted on a charging device 201; starting a low power process in response to the closed state being maintained for the set time; checking whether information related to pairing with at least one external electronic device 102 and 104 is present in the memory 130; blocking power supply using the charging device 201 if the pairing-related information is not present in the memory 130; and entering a first low power mode (ship mode) in which power is not supplied to an internal circuit of the electronic device 101.

The confirming the closed state of the charging device 201 according to the first embodiment may include: detecting a change in magnetic force corresponding to a magnetic member 311 included in the charging device 201 on the basis of the Hall sensor (Hall IC) included in the sensor module 176; and confirming the closed state of the charging device 201 on the basis of the change in magnetic force generated by the magnetic member 311.

A method according to one embodiment may further include blocking power supplied from the power management module 188 to the sensor module 176 in response to entering the first low power mode (ship mode), and at least partially deactivating the sensor module 176.

A method according to one embodiment may further include, in response to entering the first low power mode (ship mode), an operation of blocking power supplied from the battery 189 to the sensor module 176 with respect to a battery 189 supplying power to the sensor module 176 via the power management module 188.

A method according to one embodiment may further comprise, in the first low power mode (ship mode) in which power is not supplied to the internal circuit, when power is supplied from the charging device 201, supplying the power to the sensor module 176 in the power management module 188 and at least partially activating the sensor module 176.

According to one embodiment, the method may further include, while the low power process is started, entering a second low power mode (shutdown mode) in which power set in the internal circuit is supplied, if pairing-related information with at least one external electronic device 102 and 104 is present.

According to one embodiment, the pairing-related information may include at least one of information confirming a connection history with the at least one external electronic device 102 and 104, and login-related information from the at least one external electronic device 102 and 104.

A method according to one embodiment may further include transmitting a request signal to the charging device 201 to block power supply, so that power is not supplied from the charging device 201 when the pairing-related information is not present.

A method according to one embodiment may further include: checking whether power is supplied by the charging device 201 in response to the closed state being maintained for a set time; starting a low power process in response to a situation where power is not supplied from the charging device 201; checking whether pairing-related information with at least one external electronic device 102 and 104 is present; and entering the first low power mode (ship mode) if the pairing-related information is not present.

According to one embodiment, a method may further include releasing the first low power mode in response to the power supplied from the charging device 201 exceeding a set threshold, and supplying the power to the internal circuit of the electronic device 101.

According to one embodiment, on a non-transitory computer-readable storage medium storing one or more programs for executing a power supply method for an electronic device 101, the one or more programs, when executed by a processor 120 of the electronic device 101, while the electronic device 101 is mounted on a charging device 201, may perform: detecting a closed state with respect to the charging device 201 using a sensor module 176 of the electronic device 101; starting a low power process in response to the closed state being maintained for a set time; checking whether pairing-related information with at least one external electronic device 102 and 104 is present in the memory 130; blocking power supply using the charging device 201, if the pairing-related information is not present in the memory 130; and entering a first low power mode (ship mode) in which power is not supplied to the internal circuit of the electronic device 101.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. It is intended that features described with respect to separate embodiments, or features recited in separate claims, may be combined unless such a combination is explicitly specified as being excluded or such features are incompatible. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The embodiments of the present invention disclosed in this specification and the drawings are merely specific examples provided to facilitate an easy explanation of the technical content according to the embodiments of the present invention and to aid in understanding the embodiments of the present invention, and are not intended to limit the scope of the embodiments of the present invention. Therefore, the scope of the various embodiments of the present invention should be interpreted as including not only the embodiments disclosed herein, but also all modified or altered forms derived on the basis of the technical concept of the various embodiments of the present invention.

## Claims

1. An electronic device 101 comprising:
a sensor module 176 for detecting, while mounted on the charging device 201, the state of the charging device 201;
a communication module 190;
a memory 130; and
a processor 120 operatively connected to the sensor module 176, the communication module 190, and the memory 130, wherein
the processor 120:
checks a closed state of the charging device 201 by using the sensor module 176;
starts a low power process in response to the closed state being maintained for the set time;
checks whether information related to pairing with at least one external electronic device 102 and 104 is present in the memory 130;
blocks power supply using the charging device 201 if the pairing-related information is not present in the memory 130; and
enters a first low power mode (ship mode) in which power is not supplied to an internal circuit of the electronic device 101.

2. The electronic device of claim 1, wherein
the sensor module 176 comprises at least one Hall sensor (Hall IC), and
the processor 120:
detects changes in magnetic force generated on the basis of a magnetic member 311 included in the charging device 201 using the Hall sensor; and
determines a closed state for the charging device 201 on the basis of the magnetic field value generated by the magnetic member 311.

3. The electronic device of claim 1, further comprising a power management module 188 that supplies power to the internal circuit, wherein
the processor 120, in response to entering a first low power mode (ship mode), blocks power supplied from the power management module 188 to the sensor module 176, and at least partially deactivates the sensor module 176.

4. The electronic device of claim 3, further comprising a battery 189 that supplies power to the sensor module 176 via the power management module 188, wherein
the processor 120, in response to entering a first low power mode (ship mode), blocks power supplied from the battery 189 to the sensor module 176.

5. The electronic device of claim 4, wherein
the processor 120, in the first low power mode (ship mode) in which power is not supplied to the internal circuit, supplies the power to the sensor module 176 in the power management module 188 when power is supplied from the charging device 201, and at least partially activates the sensor module 176 on the basis of the supplied power.

6. The electronic device of claim 1, wherein
the processor 120, while the low power process is started, enters a second low power mode (shutdown mode) in which power set in the internal circuit is supplied, if pairing-related information with at least one external electronic device 102 and 104 is present.

7. The electronic device of claim 1, wherein
the pairing-related information comprises at least one of information confirming a connection history with the at least one external electronic device 102 and 104, and login-related information corresponding to the at least one external electronic device 102 and 104.

8. The electronic device of claim 1, wherein
the processor 120 transmits a request signal to the charging device 201 to block power supply so that power may not be supplied from the charging device 201 when the pairing-related information is not present.

9. The electronic device of claim 1, wherein
the processor 120 checks whether power is supplied by the charging device 201 in response to the closed state being maintained for a set time, starts a low power process in response to a situation where power is not supplied from the charging device 201, checks whether pairing-related information with at least one external electronic device 102 and 104 is present, and enters the first low power mode (ship mode) if the pairing-related information is not present.

10. The electronic device of claim 1, wherein
the processor 120 releases the first low power mode in response to the power supplied from the charging device 201 exceeding a set threshold, and supplies power to the internal circuit of the electronic device 101.

11. A method for supplying power to an electronic device 101, the method may comprise: checking a closed state of the charging device by using the sensor module 176 while mounted on a charging device 201; starting a low power process in response to the closed state being maintained for the set time; checking whether information related to pairing with at least one external electronic device 102 and 104 is present in the memory 130; blocking power supply using the charging device 201 if the pairing-related information is not present in the memory 130; and entering a first low power mode (ship mode) in which power is not supplied to an internal circuit of the electronic device 101.

12. The method of claim 11, wherein
the confirming the closed state of the charging device 201 comprises:
detecting a change in magnetic force corresponding to a magnetic member 311 included in the charging device 201 on the basis of the Hall sensor (Hall IC) included in the sensor module 176; and
confirming the closed state of the charging device 201 on the basis of the change in magnetic force generated by the magnetic member 311.

13. The method of claim 11, further comprising:
blocking power supplied from the power management module 188 to the sensor module 176 in response to entering the first low power mode (ship mode); and
at least partially deactivating the sensor module 176.

14. The method of claim 11, further comprising, while the low power process is started, entering a second low power mode (shutdown mode) in which power set in the internal circuit is supplied, if pairing-related information with at least one external electronic device 102 and 104 is present.

15. The method of claim 11, further comprising:
checking whether power is supplied by the charging device 201 in response to the closed state being maintained for a set time;
starting a low power process in response to a situation where power is not supplied from the charging device 201;
checking whether pairing-related information with at least one external electronic device 102 and 104 is present; and
entering the first low power mode (ship mode) if the pairing-related information is not present.
